# EUROPEAN PATENT SPECIFICATION

(11) **EP 2 498 369 B1**
(45) Date of publication and mention of the grant of the patent: **25.03.2015**
(21) Application number: 11783097.6
(22) Date of filing: 08.06.2011
(51) Int. Cl.: H02J 7/00, H02H 11/00

(54) **CONTROL CIRCUIT FOR PREVENTING BATTERY GROUP FROM BEING REVERSELY CONNECTED AND POWER SUPPLY SYSTEM FOR BASE STATION**
STEUERSCHALTUNG ZUR VERHINDERUNG DES UMGEKEHRTEN ANSCHLUSSES EINER BATTERIEGRUPPE UND STROMVERSORGUNGSSYSTEM FÜR EINE BASISSTATION
CIRCUIT DE COMMANDE PERMETTANT D'EMPÊCHER UN GROUPE DE BATTERIES D'ÊTRE CONNECTÉ DE FAÇON INVERSÉE ET SYSTÈME D'ALIMENTATION ÉLECTRIQUE POUR STATION DE BASE

(43) Date of publication of application: 12.09.2012
(73) Proprietor: Huawei Technologies Co., Ltd., Longgang District Shenzhen, Guangdong 518129 (CN)
(72) Inventor: ZOU, Shanqin, Guangdong 518129 (CN)
(74) Representative: Epping - Hermann - Fischer
(86) International application number: PCT/CN2011/075443
(87) International publication number: WO 2011/144180

(56) References cited:
- EP-A2- 0 756 367
- CN-A- 1 641 953
- CN-A- 101 989 753
- GB-A- 2 028 036
- JP-A- 2002 118 958
- US-A- 5 519 559
- US-A1- 2001 024 108

## Description

### TECHNICAL FIELD

The present invention relates to the field of power supply control technology, more particularly to a control circuit for preventing a battery pack from being reversely connected, and a power supply system for base station.

### DESCRIPTION OF THE RELATED ART

In a large power supply system for base station, it is usually necessary to provide one or more large capacity battery packs serving as a backup power supply for supplying power to base station devices. A large-medium-sized base station power supply is usually expected to supply a current of tens to hundreds of amperes, and thus, in general, equipped with battery packs of several hundreds of ampere-hours.

For large-medium-sized base station power supply systems, common diode-based circuits for preventing reverse connection or MOS transistor-controlled circuits for preventing reverse connection are not applicable. If a storage battery is reversely connected by accident, equivalent to forming a short circuit, a huge transient current may occur. Without appropriate protection, storage batteries and devices per se would be inevitably damaged. However, device damages may also happen if a system is protected merely depending on the auto-blowing of a fuse in its primary circuit. Examples of circuits for preventing reverse connections of batteries are shown in EP 0 756 367 and in GB 2 028 036.

Hence, it is necessary to design a circuit for preventing reverse connection used in large-medium-sized base station power supply systems, capable of not only preventing device damages caused when a battery is connected reversely, but also operating reliably in normal battery connection.

### SUMMARY OF THE INVENTION

In view of this, an object of this invention is to provide a control circuit for preventing reverse connection and a base station power supply, capable of addressing the problem of preventing reverse connection when connecting a large-medium-sized battery to a base station power supply system.

A control circuit for preventing a battery pack being reversely connected is provided in one embodiment of this invention, comprising: a normally-open contactor, a first normally-open relay, a first diode, a second diode, a second normally-open relay, a third diode, a controller.

The normally-open contactor has a first contact serving as a first input terminal of the control circuit, and a second contact connected to a cathode of the first diode.

An anode of the first diode is connected to a movable contact of the first normally-open relay, and a fixed contact of the first normally-open relay is connected to a second terminal of a control coil of the normally-open contactor.

A first terminal of the control coil of the normally-open contactor is connected to a cathode of the third diode, and an anode of the third diode serves as a second input terminal of the control circuit.

A first terminal of a control coil of the first normally-open relay is connected to a movable contact of the second normally-open relay, and a second terminal of the control coil of the first normally-open relay is connected to an anode of the second diode, a cathode of the second diode is connected to the first contact of the normally-open contactor.

A fixed contact of the second normally-open relay is connected to a common terminal between the first terminal of the control coil of the normally-open contactor and the cathode of the third diode, and the two terminals of the control coil of the second normally-open relay are connected to the output terminals of the controller.

The anode of the third diode is a first output terminal of the control circuit, and the second contact of the normally-open contactor is a second output terminal of the control circuit.

A positive power supply input terminal and a negative power supply input terminal of the controller are connected to the first output terminal and the second output terminal of the control circuit, respectively.

A base station power supply is also provided in one embodiment of this invention, comprising a battery pack and a rectifying power supply module, the base station power supply further comprising a control circuit for preventing a battery pack from being reversely connected.

The battery pack is connected between a first input terminal and a second input terminal of the control circuit for preventing a battery pack from being reversely connected. The rectifying power supply module is connected between a first output terminal and a second output terminal of the control circuit for preventing a battery pack from being reversely connected

According to specific embodiments of this invention provided herein, this invention discloses the following technical effects.

Through sending control instruction(s) by the controller, the control circuit of one embodiment of this invention can control whether the control coil of the second relay operates, and thus the closing/opening of the normally-open contactor, so that the battery pack to be protected is connected to or disconnected from the base station power supply system. Thus, the embodiment of this invention can realize an auto-connection/disconnection of a battery pack in a base station power supply system; meanwhile, the circuit of the embodiment of this invention also can disconnect the battery pack from the base station power supply system in time when a reverse connection fault of a large-medium-sized battery pack occurs in the base station power supply system, protecting the normal operation of the system.

As compared to common circuits for preventing reverse connection employing merely common diodes or controlled by MOS transistor, the control circuit of the embodiment of this invention can achieve reverse connection protection when connecting a large-medium-sized battery pack to a base station power supply system.

### BRIEF DESCRIPTION OF THE DRAWINGS

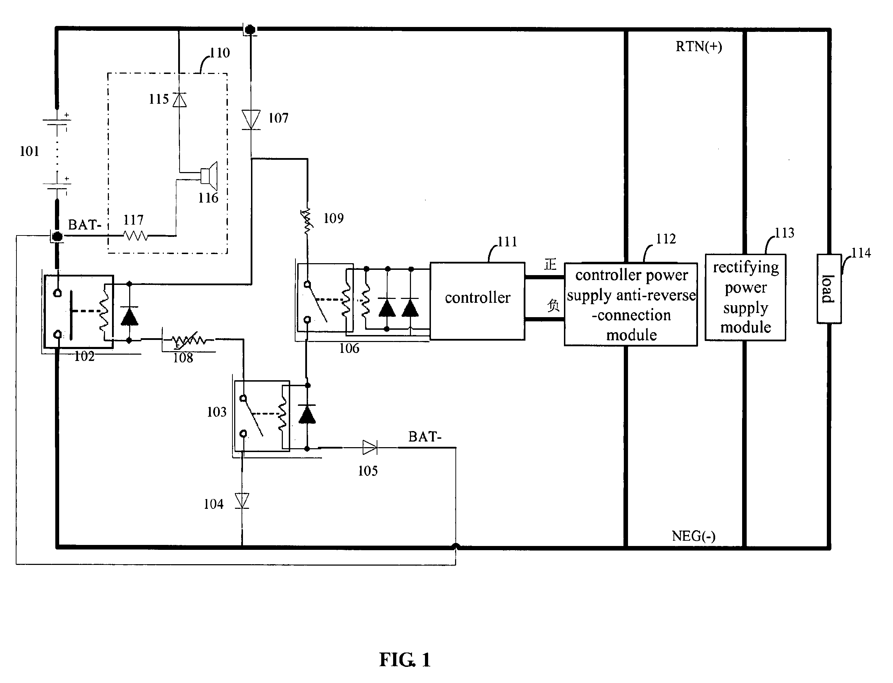

Fig.1 is a diagram of a control circuit for preventing a battery pack from being reversely connected according to an embodiment of this invention.

### DETAILED DESCRIPTION OF THE PREFERRED EMBODIMENT

For a clear understanding of the above objects, features and advantages of this invention, this invention will be further described below with reference to accompanying drawings and specific embodiments.

In view of this, the object of this invention is to provide a control circuit for preventing reverse connection and a base station power supply system, capable of addressing the problem of preventing a battery pack from being reversely connected when connecting a large-medium-sized battery pack to a base station power supply system.

Referring to Fig.1, Fig.1 is a diagram of a control circuit for preventing a battery pack from being reversely connected according to an embodiment of this invention. The control circuit comprises: a normally-open contactor 102, a first normally-open relay 103, a first diode 104, a second diode 105, a second normally-open relay 106, a third diode 107, a controller 111, and a controller power supply anti-reverse-connection module 112.

A first contact of the normally-open contactor 102 serves as a first input terminal of the control circuit and is connected to the cathode of a battery pack 101 to be protected, a second contact of the normally-open contactor 102 is connected to the cathode of the first diode 104.

The anode of the first diode 104 is connected to a movable contact of the first normally-open relay 103, a fixed contact of the first normally-open relay 103 is connected to a second terminal of a control coil of the normally-open contactor 102.

A first terminal of the control coil of the normally-open contactor 102 is connected to the cathode of the third diode 107, the anode of the third diode 107 serves as a second input terminal of the control circuit and is connected to the anode of the battery pack 101.

A first terminal of a control coil of the first normally-open relay 103 is connected to a movable contact of the second normally-open relay 106, a second terminal of the control coil of the first normally-open relay 103 is connected to the anode of the second diode 105, the cathode of the second diode 105 is connected to the first contact of the normally-open contactor 102, i.e., the first input terminal of the control circuit.

A fixed contact of the second normally-open relay 106 is connected to a common terminal of the first terminal of the control coil of the normally-open contactor 102 and the cathode of the third diode 107, the two terminals of the control coil of the second normally-open relay 106 are connected to the output terminals of the controller 111.

The anode of the third diode 107 (i.e., the second input terminal of the control circuit) also serves as a first output terminal of the control circuit, while the second contact of the normally-open contactor 102 is a second output terminal of the control circuit.

The positive power supply input terminal and the negative power supply input terminal of the controller 111 are connected to the first output terminal and second output terminal of the control circuit.

In order to prevent reverse connection for the controller 111, the control circuit may further comprise: a controller power supply anti-reverse-connection module 112, which is connected between a power supply input terminal of the controller 111 and the power supply of the controller.

Since the controller 111 has a smaller operating current, the controller power supply anti-reverse-connection module 112 can be implemented by a diode. Particularly, a diode can be connected in series between the positive or negative power supply input terminal of the controller 111 and the controller power supply to realize anti-reverse-connection for the controller 111.

The diode can be connected in series to the positive or negative power supply input terminal of the controller 111, and is connected in series according to a normal current flow direction of the diode.

Particularly, when the diode is connected to the positive power supply input terminal of the controller 111, the anode of the diode is connected to the positive of the controller power supply, and the cathode of the diode is connected to the positive power supply input terminal of the controller 111. When the controller power supply is normally connected, the diode is turned on and the controller 111 operates properly; otherwise, when the power supply is reversely connected to the controller 111, that is, the anode of the diode 111 is connected to the negative of the power supply, the diode is cut off to protect the controller 111.

When the diode is connected to the negative power supply input terminal of the controller 111, the anode of the diode is connected to the negative power supply input terminal of the controller 111, and the cathode of the diode is connected to the positive power supply input terminal of the controller 111. When the power supply of the controller 111 is normally connected, the diode is turned on and the controller 111 operates properly; otherwise, once the power supply of the controller 111 is reversely connected, that is, the cathode of the diode 111 is connected to the positive of the power supply, the diode is cut off to protect the controller 111.

Preferably, in an embodiment of this invention, the controller 111 and the controller power supply anti-reverse-connection module 112 can be provided separately, or can be provided integrally.

In an embodiment of this invention, the controller 111 can control the opening/closing of the normally-open contactor 102. Particularly, the controller 111 can send a control instruction to control whether the control coil of the second normally-open relay 106 operates, and thus the opening or closing of the normally-open contactor 102, so as to connect/disconnect a battery pack to be protected to/from a base station power supply system.

Note that, in this embodiment, each of the normally-open contactor 102, the first normally-open relay 103, and the second normally-open relay 106 has a diode in reverse parallel with the relay, provided between the two terminals of its control coil, which is a regular technique in the art and will not be described in detail herein.

The operation principle of the control circuit is as follows.

When the control circuit for preventing a battery from being reversely connected is in use, a first input terminal of the control circuit is connected to the negative of a battery pack 101 to be protected, and a second input terminal is connected to the positive of the battery pack 101 to be protected; a first output terminal of the control circuit is connected to the positive line of the busbar of the base station power supply system (represented as RTN+ in Fig.1), and a second output terminal is connected to the negative line of the system busbar (represented as NEG- in Fig.1).

A rectifying power supply module 113 of the base station power supply system is connected between the positive line and the negative line of the system busbar. As shown in Fig.1, a system load 114 is also connected between the positive line and the negative line of the system busbar. Wherein, the rectifying power supply module 113 is used to convert an AC power supply to a DC power supply for providing the base station power supply system with a DC power supply to power the system load 114.

When the base station power supply system is powered by a battery pack 101 and the battery pack 101 is connected inversely, the controller 111 cannot be powered on due to the operation of the controller power supply anti-reverse-connection module 112, and thus cannot send a control signal to the control coil of the second normally-open relay 106, as a result the control coil of the second normally-open relay 106 is inactivated. At the same time, because the second diode 105 and the third diode 107 are reverse-biased and thus cut off, the control coil of the first normally-open relay 103 is also inactivated and the movable contact of the first normally-open relay 103 is disconnected, so that the control coil of the normally-open contactor 102 is inactivated and the movable contact of the normally-open contactor 102 is disconnected, the battery pack 101 cannot be connected to the system, and the base station power supply system is in a protected state.

When the base station power supply system is powered by the rectifying power supply module 113, the system busbar is live as normal, at that point, if the battery pack 101 is connected reversely, even though the controller 111 sends a control signal to the control coil of the second normally-open relay 106, because the second diode 105 and the third diode 107 are reverse-biased and thus cut off, the control coil of the second normally-open relay 106 is inactivated the movable contact of the first normally-open relay 103 is disconnected, so that the control coil of the normally-open contactor 102 is inactivated and the movable contact of the normally-open contactor 102 is disconnected, so that the battery pack 101 cannot be connected to the system, and the base station power supply system is in a protected state.

When the battery pack 101 is normally connected, the controller 111 is powered on, and controls the movable contact of the second normally-open relay 106 to be closed. At that point, the first normally-open relay 103 is powered on, and the movable contact of first normally-open relay 103 is closed, so that the control coil of the normally-open contactor 102 is activated, and the movable contact of the normally-open contactor 102 is closed to connect the battery pack 101 to the system busbar properly.

In this embodiment of this invention, when the system is only powered by the battery pack 101 and when the battery pack 101 is connected normally (the rectifying power supply module 113 does not work at that point), instead of being connected to the system directly, the battery pack 101 can only be connected to the system busbar under the control of the controller 111.

Particularly, in the control circuit of an embodiment of this invention, the second diode 105 connected in series to the control coil of the first normally-open relay 103 is connected to the negative of the battery pack 101 (shown as BAT- in Fig.1) The first diode 104 connected in series to the circuit of the movable contact of the first normally-open relay 103 has its cathode connected to the negative line of the busbar (shown as NEG- in Fig.1). Therefore, the system can be prevented from being powered on immediately when the battery pack 101 is connected to the system, and thus preventing the occurrence of uncertain events.

The control circuit of an embodiment of this invention, through sending a control instruction by the controller 111, controls the control coil of the second normally-open relay 106 to be activated or inactivated, and the closing or opening of the normally-open contactor 102, so that the battery pack to be protected can be connected to or disconnected from the base station power supply system. Thus, the embodiment of this invention can realize the automatic connection or disconnection of a battery pack in a base station power supply system; at the same time, the circuit of an embodiment of this invention also can disconnect the battery pack from the base station power supply system in time when a fault of battery pack reverse connection occurs in the base station power supply system to protect the normal operation of the system.

As compared to common diode-based circuits for preventing reverse connection or MOS transistor-controlled circuits for preventing reverse connection, the control circuit of an embodiment of this invention can realize preventing a battery from being reversely connected when connecting a large-medium-sized battery to a base station power supply system.

Preferably, in an embodiment of this invention, in order to prevent the burning of circuits or devices when the control circuit is shorted, a first short preventing circuit 108 is provided which is connected between the second terminal of the control coil of the normally-open contactor 102 and the fixed contact of the first normally-open relay 103.

Preferably, in an embodiment of this invention, in order to prevent the burning of circuits or devices when the control circuit is shorted, a second short preventing circuit 109 is provided, which is connected between the first terminal of the control coil of the normally-open contactor 102 and the fixed contact of the second normally-open relay 106.

In an embodiment of this invention, each of the first short preventing circuit 108 and the second short preventing circuit 109 employs a short protection element. Particularly, the short protection element may be self-recovery fuse PTC (positive Temperature Coefficient), thermistor or the like. When the control circuit is shorted, the short protection element generates heat and its resistance increases instantaneously to cut down the control circuit for protection; when the short fault is recovered, the short protection element exhibits a low resistance state, so that the control circuit is turned on and operates properly.

Preferably, in an embodiment of this invention, the control circuit may further comprise: an alarm unit 110. The alarm unit 110 is connected between a first input terminal and a second input terminal of the control circuit, when the control circuit for preventing a battery from being reversely connected is in use, the alarm unit 110 is connected between the positive and negative of the battery pack 101 to be protected.

When the battery pack 101 is connected reversely, the alarm unit 110 operates to send an alarm to prompt an operator the battery reverse connect fault, enabling the operator to recover the fault in time.

Particularly, the alarm unit 110 can send an audio alarm, as shown in Fig.1, the alarm unit 110 may comprise: a fourth diode 115, a speaker 116, an inductor 117.

The cathode of the fourth diode 115 is connected to the first input terminal of the control circuit, the anode of the fourth diode 115 is connected to a first terminal of the speaker 116; a second terminal of the speaker 116 is connected to a second input terminal of the control circuit via the inductor 117.

When the battery pack 101 is connected normally, the fourth diode 115 is reverse biased and is cut off, the speaker 116 is disconnected at its both terminals and the alarm unit 110 does not operate; when the battery pack 101 is connected reversely, the fourth diode 115 is turned on and the speaker 116 is turned on, so that the alarm unit 110 may sends an audio alarm.

Certainly, in an embodiment of this invention, the alarm unit 110 also can provide a light alarm, so long as there is an appropriate LED provided.

Correspondingly, a base station power supply system is further provided in an embodiment of this invention, the base station power supply system comprising: a battery pack, a rectifying power supply module, and a control circuit for preventing a battery pack from being reversely connected.

The control circuit for preventing a battery pack from being reversely connected is as same as that of the control circuit in the above embodiment of this invention.

The battery pack is connected between a first input terminal and a second input terminal of the control circuit for preventing a battery pack from being reversely connected; the rectifying power supply module is connected between a first output terminal and a second output terminal of the control circuit for preventing a battery pack from being reversely connected.

The control circuit for preventing a battery pack from being reversely connected is used for disconnecting the battery pack from the base station power supply system in time when a battery reverse connect fault occurs in the base station power supply system to protect the proper operation of the system.

A control circuit for preventing a battery pack from being reversely connected and a base station power supply system provided in this invention have been described in detail above, and the principle and implementation manners of this invention have been set forth herein using a particular example, the description of the above embodiment is merely used to assist the understanding of the method of this invention and its core idea; meanwhile, those skilled in the art, according to the concept of this invention, may make modifications to its particular implementation manners or application scope. In summary, the content of this specification should not be conceived as limitation of this invention.

## Claims

1. A control circuit for preventing a battery from being reversely connected, wherein the circuit comprises: a normally-open contactor, a first normally-open relay, a first diode, a second diode, a second normally-open relay, a third diode, a controller;
the normally-open contactor has a first contact serving as a first input terminal of the control circuit, and a second contact connected to a cathode of the first diode;
an anode of the first diode is connected to a movable contact of the first normally-open relay, and a fixed contact of the first normally-open relay is connected to a second terminal of a control coil of the normally-open contactor;
a first terminal of the control coil of the normally-open contactor is connected to a cathode of the third diode, and an anode of the third diode serves as a second input terminal of the control circuit;
a first terminal of a control coil of the first normally-open relay is connected to a movable contact of the second normally-open relay, and a second terminal of the control coil of the first normally-open relay is connected to an anode of the second diode, a cathode of the second diode is connected to the first contact of the normally-open contactor;
a fixed contact of the second normally-open relay is connected to a common terminal between the first terminal of the control coil of the normally-open contactor and the cathode of the third diode, and two terminals of the control coil of the second normally-open relay are connected to the output terminals of the controller;
the anode of the third diode is a first output terminal of the control circuit, and the second contact of the normally-open contactor is a second output terminal of the control circuit;
a positive power supply input terminal and a negative power supply input terminal of the controller are connected to the first output terminal and the second output terminal of the control circuit, respectively.

2. The control circuit for preventing a battery from being reversely connected according to claim 1, **characterized in that** a short protection circuit is connected between the second terminal of the control coil of the normally-open contactor and the fixed contact of the first normally-open relay.

3. The control circuit for preventing a battery from being reversely connected according to claim 1, **characterized in that** a short protection circuit is connected between the first terminal of the control coil of the normally-open contactor and the fixed contact of the second normally-open relay.

4. The control circuit for preventing a battery from being reversely connected according to claim 2 or 3, **characterized in that** the short protection circuit is a self-recovery fuse PTC or a thermistor.

5. The control circuit for preventing a battery from being reversely connected according to any one of claim 1 to 3, **characterized in that** the circuit further comprises an alarm unit;
the alarm unit is connected between the first input terminal and the second input terminal of the control circuit, and is used to send a reverse connection alarm when a fault of battery pack reverse connection occurs.

6. The control circuit for preventing a battery from being reversely connected according to claim 5, **characterized in that** the alarm unit comprises: a fourth diode, a speaker, an inductor;
the cathode of the fourth diode is connected to the first input terminal of the control circuit, the anode of the fourth diode is connected to a first terminal of the speaker; a second terminal of the speaker is connected to the second input terminal of the control circuit via the inductor.

7. The control circuit for preventing a battery from being reversely connected according to any one of claims 1 to 3, **characterized in that** the control circuit further comprises: a controller power supply anti-reverse-connection module; wherein:
the controller power supply anti-reverse-connection module is connected between a power supply input terminal of the controller and the power supply of the controller.

8. The control circuit for preventing a battery from being reversely connected according to claim 7, **characterized in that** the controller power supply anti-reverse-connection module is a diode;
the diode is connected in series between the positive or negative power supply input terminal of the controller and the power supply of the controller.

9. The control circuit for preventing a battery from being reversely connected according to claim 7, **characterized in that** the controller and the controller power supply anti-reverse-connection module are provided separately; or the controller and the controller power supply anti-reverse-connection module are provided integrally.

10. A base station power supply, comprising a battery pack and a rectifying power supply module, **characterized in that** the base station power supply further comprises a control circuit for preventing a battery from being reversely connected according to any one of claims 1 to 9; wherein:
the battery pack is connected between a first input terminal and a second input terminal of the control circuit for preventing a battery from being reversely connected; the rectifying power supply module is connected between a first output terminal and a second output terminal of the control circuit for preventing a battery from being reversely connected.

## Patentansprüche

1. Steuerschaltung zum Verhindern einer Verpolung einer Batterie, wobei die Schaltung Folgendes umfasst: eine Schließer-Schaltvorrichtung, ein erstes Schließerrelais, eine erste Diode, eine zweite Diode, ein zweites Schließerrelais, eine dritte Diode und eine Steuerung;
wobei die Schließer-Schaltvorrichtung einen ersten Kontakt, der als ein erster Eingangsanschluss der Steuerschaltung dient, und einen mit einer Kathode der ersten Diode verbundenen zweiten Kontakt aufweist;
eine Anode der ersten Diode mit einem beweglichen Kontakt des ersten Schließerrelais verbunden ist und ein fester Kontakt des ersten Schließerrelais mit einem zweiten Anschluss einer Steuerspule der Schließer-Schaltvorrichtung verbunden ist;
ein erster Anschluss der Steuerspule der Schließer-Schaltvorrichtung mit einer Kathode der dritten Diode verbunden ist und eine Anode der dritten Diode als ein zweiter Eingangsanschluss der Steuerschaltung dient,
ein erster Anschluss einer Steuerspule des ersten Schließerrelais mit einem beweglichen Kontakt des zweiten Schließerrelais verbunden ist und ein zweiter Anschluss der Steuerspule des ersten Schließerrelais mit einer Anode der zweiten Diode verbunden ist und eine Kathode der zweiten Diode mit dem ersten Kontakt der Schließer-Schaltvorrichtung verbunden ist;
ein fester Kontakt des zweiten Schließerrelais mit einem gemeinsamen Anschluss zwischen dem ersten Anschluss der Steuerspule der Schließer-Schaltvorrichtung und der Kathode der dritten Diode verbunden ist und zwei Anschlüsse der Steuerspule des zweiten Schließerrelais mit den Ausgangsanschlüssen der Steuerung verbunden sind; die Anode der dritten Diode ein erster Ausgangsanschluss der Steuerschaltung ist und der zweite Kontakt der Schließer-Schaltvorrichtung ein zweiter Ausganganschluss der Steuerschaltung ist; und
ein positiver Stromversorgungs-Eingangsanschluss und ein negativer Stromversorgungs-Eingangsanschluss der Steuerung mit dem ersten Ausgangsanschluss bzw. dem zweiten Ausgangsanschluss der Steuerschaltung verbunden sind.

2. Steuerschaltung zum Verhindern einer Verpolung einer Batterie nach Anspruch 1, **dadurch gekennzeichnet, dass** eine Kurzschlussschutzschaltung zwischen den zweiten Anschluss der Steuerspule der Schließer-Schaltvorrichtung und den festen Kontakt des ersten Schließerrelais geschaltet ist.

3. Steuerschaltung zum Verhindern einer Verpolung einer Batterie nach Anspruch 1, **dadurch gekennzeichnet, dass** eine Kurzschlussschutzschaltung zwischen den ersten Anschluss der Steuerspule der Schließer-Schaltvorrichtung und den festen Kontakt des zweiten Schließerrelais geschaltet ist.

4. Steuerschaltung zum Verhindern einer Verpolung einer Batterie nach Anspruch 2 oder 3, **dadurch gekennzeichnet, dass** die Kurzschlussschutzschaltung ein Selbstwiederherstellungs-Sicherungs-PTC oder ein Thermistor ist.

5. Steuerschaltung zum Verhindern einer Verpolung einer Batterie nach einem der Ansprüche 1 bis 3, **dadurch gekennzeichnet, dass** die Schaltung ferner eine Alarmeinheit umfasst;
wobei die Alarmeinheit zwischen den ersten Eingangsanschluss und den zweiten Eingangsanschluss der Steuerschaltung geschaltet ist und verwendet wird, um einen Verpolungsalarm zu senden, wenn ein Batteriepack-Verpolungsfehler auftritt.

6. Steuerschaltung zum Verhindern einer Verpolung einer Batterie nach Anspruch 5, **dadurch gekennzeichnet, dass** die Alarmeinheit eine vierte Diode, einen Lautsprecher und eine Induktivität umfasst;
wobei die Kathode der vierten Diode mit dem ersten Eingangsanschluss der Steuerschaltung verbunden ist, die Anode der vierten Diode mit einem ersten Anschluss des Lautsprechers verbunden ist; und ein zweiter Anschluss des Lautsprechers über die Induktivität mit dem zweiten Eingangsanschluss der Steuerschaltung verbunden ist.

7. Steuerschaltung zum Verhindern einer Verpolung einer Batterie nach einem der Ansprüche 1 bis 3, **dadurch gekennzeichnet, dass** die Steuerschaltung ferner ein Steuerungs-Stromversorgungs-Antiverpolungsmodul umfasst; wobei das Steuerungs-Stromversorgungs-Antiverpolungsmodul zwischen einen Stromversorgungs-Eingangsanschluss der Steuerung und die Stromversorgung der Steuerung geschaltet ist.

8. Steuerschaltung zum Verhindern einer Verpolung einer Batterie nach Anspruch 7, **dadurch gekennzeichnet, dass** das Steuerungs-Stromversorgungs-Antiverpolungsmodul eine Diode ist;
wobei die Diode zwischen dem positiven oder negativen Stromversorgungs-Eingangsanschluss der Steuerung und der Stromversorgung der Steuerung in Reihe geschaltet ist.

9. Steuerschaltung zum Verhindern einer Verpolung einer Batterie nach Anspruch 7, **dadurch gekennzeichnet, dass** die Steuerung und das Steuerungs-Stromversorgungs-Antiverpolungsmodul getrennt bereitgestellt sind; oder die Steuerung und das Steuerungs-Stromversorgungs-Antiverpolungsmodul integral bereitgestellt sind.

10. Basisstations-Stromversorgung, die ein Batteriepack und ein Gleichrichtungs-Stromversorgungsmodul umfasst, **dadurch gekennzeichnet, dass** die Basisstations-Stromversorgung ferner eine Steuerschaltung zum Verhindern einer Verpolung einer Batterie nach einem der Ansprüche 1 bis 9 umfasst; wobei
das Batteriepack zwischen einen ersten Eingangsanschluss und einen zweiten Eingangsanschluss der Steuerschaltung zur Verhinderung einer Verpolung einer Batterie geschaltet ist; und das Gleichrichtungs-Stromversorgungsmodul zwischen einen ersten Ausgangsanschluss und einen zweiten Ausgangsanschluss der Steuerschaltung zur Verhinderung einer Verpolung einer Batterie geschaltet ist.

## Revendications

1. Circuit de commande pour empêcher une batterie d'être connectée en sens inverse, le circuit comprenant : un contacteur normalement ouvert, un premier relais normalement ouvert, une première diode, une deuxième diode, un deuxième relais normalement ouvert, une troisième diode, un contrôleur ;
le contacteur normalement ouvert comporte un premier contact servant de première borne d'entrée au circuit de commande, et un deuxième contact relié à une cathode de la première diode ;
une anode de la première diode est connectée à un contact mobile du premier relais normalement ouvert, et un contact fixe du premier relais normalement ouvert est connecté à une deuxième borne d'une bobine de commande du contacteur normalement ouvert ;
une première borne de la bobine de commande du contacteur normalement ouvert est connectée à une cathode de la troisième diode, et une anode de la troisième diode sert de deuxième borne d'entrée du circuit de commande ;
une première borne d'une bobine de commande du premier relais normalement ouvert est connectée à un contact mobile du deuxième relais normalement ouvert, et une deuxième borne de la bobine de commande du premier relais normalement ouvert est connectée à une anode de la deuxième diode, une cathode de la deuxième diode est connectée au premier contact du contacteur normalement ouvert ;
un contact fixe du deuxième relais normalement ouvert est connecté à une borne commune entre la première borne de la bobine de commande du contacteur normalement ouvert et la cathode de la troisième diode, et deux bornes de la bobine de commande du deuxième relais normalement ouvert sont connectées aux bornes de sortie du contrôleur ;
l'anode de la troisième diode est une première borne de sortie du circuit de commande, et le deuxième contact du contacteur normalement ouvert est une deuxième borne de sortie du circuit de commande ;
une borne d'entrée d'alimentation positive et une borne d'entrée d'alimentation négative du contrôleur sont connectées à la première borne de sortie et à la deuxième borne de sortie du circuit de commande, respectivement.

2. Circuit de commande pour empêcher une batterie d'être connectée en sens inverse selon la revendication 1, **caractérisé en ce qu'**un circuit de protection contre les courts-circuits est connecté entre la deuxième borne de la bobine de commande du contacteur normalement ouvert et le contact fixe du premier relais normalement ouvert.

3. Circuit de commande pour empêcher une batterie d'être connectée en sens inverse selon la revendication 1, **caractérisé en ce qu'**un circuit de protection contre les courts-circuits est connecté entre la première borne de la bobine de commande du contacteur normalement ouvert et le contact fixe du deuxième relais normalement ouvert.

4. Circuit de commande pour empêcher une batterie d'être connectée en sens inverse selon la revendication 2 ou la revendication 3, **caractérisé en ce que** le circuit de protection contre les courts-circuits est un fusible réarmable CTP ou une thermistance.

5. Circuit de commande pour empêcher une batterie d'être connectée en sens inverse selon l'une quelconque des revendications 1 à 3, **caractérisé en ce que** le circuit comprend en outre une unité d'alarme ;
l'unité d'alarme est connectée entre la première borne d'entrée et la deuxième borne d'entrée du circuit de commande, et est utilisée pour envoyer une alarme de connexion en sens inverse lorsque se produit un défaut pour cause de connexion en sens inverse du bloc de batteries.

6. Circuit de commande pour empêcher une batterie d'être connectée en sens inverse selon la revendication 5, **caractérisé en ce que** l'unité d'alarme comprend : une quatrième diode, un haut-parleur, une bobine d'induction ;
la cathode de la quatrième diode est connectée à la première borne d'entrée du circuit de commande, l'anode de la quatrième diode est connectée à une première borne du haut-parleur ; une deuxième borne du haut-parleur est connectée à la deuxième borne d'entrée du circuit de commande par l'intermédiaire de la bobine d'induction.

7. Circuit de commande pour empêcher une batterie d'être connectée en sens inverse selon l'une quelconque des revendications 1 à 3, **caractérisé en ce que** le circuit de commande comprend en outre : un module de connexion anti-inversion d'alimentation de contrôleur ;
le module de connexion anti-inversion d'alimentation de contrôleur étant connecté entre une borne d'entrée d'alimentation du contrôleur et l'alimentation électrique du contrôleur.

8. Circuit de commande pour empêcher une batterie d'être connectée en sens inverse selon la revendication 7, **caractérisé en ce que** le module de connexion anti-inversion d'alimentation de contrôleur est une diode ;
la diode est connectée en série entre la borne d'entrée d'alimentation positive ou négative du contrôleur et l'alimentation du contrôleur.

9. Circuit de commande pour empêcher une batterie d'être connectée en sens inverse selon la revendication 7, **caractérisé en ce que** le contrôleur et le module de connexion anti-inversion d'alimentation de contrôleur sont fournis séparément ; ou le contrôleur et le module de connexion anti-inversion d'alimentation de contrôleur sont fournis d'un seul tenant.

10. Alimentation électrique de station de base, comprenant un bloc de batteries et un module d'alimentation redresseur, **caractérisée en ce que** l'alimentation de la station de base comprend en outre un circuit de commande pour empêcher une batterie d'être connectée en sens inverse selon l'une quelconque des revendications 1 à 9 ; où le bloc de batteries étant connecté entre une première borne d'entrée et une deuxième borne d'entrée du circuit de commande pour empêcher une batterie d'être connectée en sens inverse ; le module d'alimentation redresseur étant connecté entre une première borne de sortie et une deuxième borne de sortie du circuit de commande pour empêcher une batterie d'être connectée en sens inverse.
